# EUROPEAN PATENT SPECIFICATION

(11) **EP 0 574 885 B1**
(45) Date of publication and mention of the grant of the patent: **09.04.2003**
(21) Application number: 93109546.7
(22) Date of filing: 15.06.1993
(51) Int. Cl.: G03B 13/12, G03B 17/20

(54) **Portrait photographic camera**
Porträtkamera
Appareil photographique pour portrait

(30) Priority: 15.06.1992 JP 15546392
(43) Date of publication of application: 22.12.1993
(73) Proprietor: FUJI PHOTO FILM CO., LTD., Kanagawa-ken (JP)
(72) Inventor: Omura, Hiroshi, c/o Fuji Photo Film Co.,Ltd., Tokyo (JP); Kanai, Masaharu, c/o Fuji Photo Film Co.,Ltd., Tokyo (JP); Shimizu, Mahito, c/o Fuji Photo Film Co.,Ltd., Tokyo (JP)
(74) Representative: Grünecker, Kinkeldey, Stockmair & Schwanhäusser Anwaltssozietät

(56) References cited:
- DE-A- 3 412 674
- DE-A- 3 422 189
- DE-A- 3 637 742
- US-A- 4 072 969
- US-A- 4 776 796
- PATENT ABSTRACTS OF JAPAN vol. 12, no. 463 (P-796)6 December 1988

## Description

### BACKGROUND OF THE INVENTION

### 1. Field of the Invention

The present invention relates to a portrait photographing camera, more particularly to a portrait photographing camera easily capable of photographing such a portrait that a size of a human head image is reproduced within the portrait according to a particular composition as designated. In particular, the present invention relates to a camera in accordance with the preamble of claim 1.

### 2. Description Related to the Prior Art

A camera of the afore mentioned type is known from US-A-4776796.

A driver's licence or a passport is issued to an applicant only after attachment of his or her portrait photograph. The portrait shows the applicant's facial appearance and is used for visual identification of an owner of the licence or passport with the applicant. It is general to bind or attach portrait photographs into the licences, passport, or any other article or document which it is intended shall exhibit recorded data needing to be safeguarded against unlawful alteration. There are generally used cameras designed for photographing ID portraits.

When an ID portrait camera is an instant camera, instant film units are used. On the photograph as finished from an instant film unit, a reproduced size of a human head image of the person is dependent only on the magnification in photography. An ID portrait camera otherwise can be a camera for use with negative film, which is exposed, developed and used for printing. If the negative film is subjected to contact printing, a reproduced size of a human head image is dependent only on the magnification in photography. With either camera, a photographer aims at the person's face through a viewfinder, confirms an apparent size of the human head while determining a subject distance by manual adjustment during observation, and photographs the human head image. The size of the photograph is regulated by using a cutter for cutting margins of the portrait, so as to obtain the ID portrait of an expected size as designated for the particular format by the issuer of the ID article.

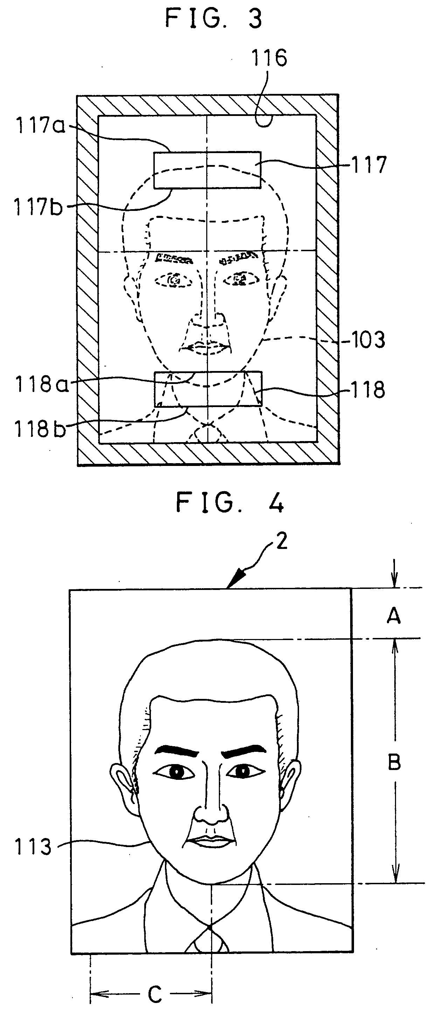

However, human head images on ID portraits are varied in size practically, unlike the regulated size of the portraits. Use of portraits in ID articles like passports, in which portraits strictly need to be safeguarded against unlawful alteration, requires the more exact regulation of the image size. The human head image should be laid out agreeably in the portrait, namely in exact composition. Let A be a width of a margin between the top of the human head image and the upper edge of the portrait. Let B be a vertical range of the human head image, and C be a horizontal interval between the center of the human head image and the left edge of the portrait (See Fig. 4). The sizes A, B and C are desired to be within respective tolerable ranges, from AMIN to AMAX, from BMIN to BMAX, and from CMIN to CMAX.

However, it is extremely difficult in the conventional ID portrait cameras to photograph a portrait of a strictly designated layout or composition of a human head image even within a tolerable range, because an apparent size of the human head and a subject distance are only determined by manual adjustment during observation. It is more difficult to reproduce the human head image in the designated layout or composition only by adjusting the orientation of the camera manually.

### SUMMARY OF THE INVENTION

In view of the foregoing problems, an object of the present invention is to provide a portrait photographing camera easily capable of photographing such a portrait that a size of a human head image is reproduced within the portrait according to a particular composition as designated.

In order to achieve the above and other objects and advantages of this invention a camera in accordance with claim 1 is provided.

In particular, a converter lens is selectively mounted on the taking lens assembly, of which combination with the converter lens has a second focal length different from the first focal length. Second index means is indicated within the field frame of the viewfinder, and adapted to framing of a human head by referring to the second index means. The human head as framed is photographed through the first converter lens so as to create on the film an image having a range similar to the predetermined range.

In a conventional system in which portraits are printed from negative film, it would be possible to obtain a portrait having a human head image of a designated sie by adjusting a printing magnification. However, as human head images on negative film would be varied in size, the printing magnification must be correspondingly adjusted so as to complicate the reproducing operation excessively. In the present invention, a portrait can be easily photographed that a size of a human head image is reproduced within the portrait according to a particular composition as designated.

### BRIEF DESCRIPTION OF THE DRAWINGS

The above objects and advantages of the present invention will become more apparent from the following detailed description when read in connection with the accompanying drawings, in which:
Fig. 1 is an explanatory view generally illustrating a camera and a human head to be photographed by it;
Fig. 2 is an exploded perspective view illustrating a construction of a viewfinder;
Fig. 3 is an explanatory view illustrating a field frame visible through the viewfinder;
Fig. 4 is an explanatory view illustrating a portrait as photographed by the camera;
Figs. 5A to 5D are explanatory views illustrating examples of a field frame;
Fig. 6 is an explanatory view illustrating a camera in accordance with the invention, for use with attachable converter lenses;
Fig. 7 is an exploded perspective view illustrating a construction of a viewfinder;
Fig. 8 is an explanatory view illustrating a field frame visible through the viewfinder; and
Fig. 9 is an explanatory view illustrating a field frame but in a state where the human head is farther than in Fig. 8.

### DETAILED DESCRIPTION OF THE PREFERRED EMBODIMENTS OF THE PRESENT INVENTION

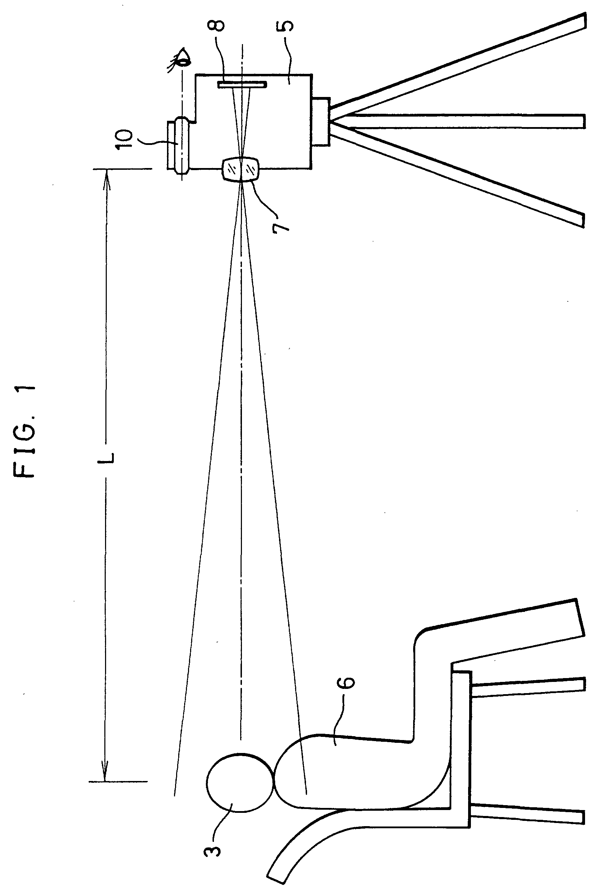

In Fig. 1 illustrating a state where a portrait of a person 6 is photographed by a camera 5. A taking lens 7 has an unchangeable focal length. When a subject distance L is in the range from LMIN to LMAX relative to a human head 3 of an ordinary size, the camera 5 photographs the human head 3 in such a manner that sizes A, B and C as illustrated in Fig. 4 is in tolerable ranges. To record the human head image, the camera 5 is used with an instant film unit 8 of a peel-apart type as known per se. After exposure, the film unit 8 is pulled from between a pair of developing rollers. Processing solution is developed during the pull of the film 8. A photosensitive sheet of the film unit being peeled away from a receiving sheet, a portrait is obtained having the human head image reproduced at the magnitude of exposure.

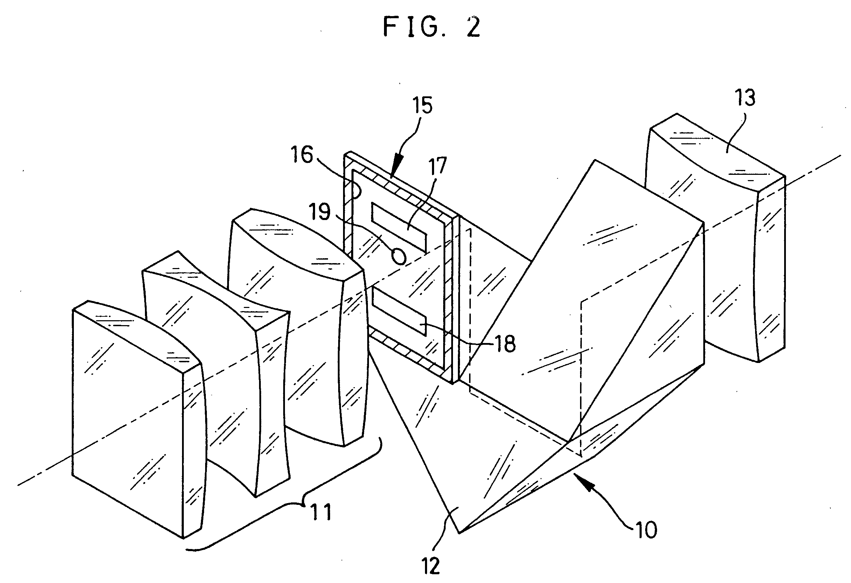

A viewfinder 10 of the camera 5 is of a real-image type, and is structurally illustrated in Fig. 2. The viewfinder 10 is constituted of an objective lens 11 of a positive power, a Porro prism 12 for erecting the orientation of images, an eye-piece lens 13 of a positive power, and a reticle plate 15 arranged on an incident face of the Porro prism 12. The reticle 15 consists of a transparent plate, e.g. of glass or acrylic resin, as provided with a field frame 16 defined inside an opaque frame, and a pair of semi-transparent index marks 17 and 18, both formed by deposition or printing. Because the reticle 15 is positioned on a focal plane of the objective lens 11, observation of the human head 3 through the eye-piece 13, as illustrated in Fig. 3, is accompanied with recognition of images of the field frame 16 and the index marks 17 and 18 as sharply focussed with the human head 3.

Positions of index mark images 117 and 118, as seen through the viewfinder 10, correspond to positions on the focal plane of the taking lens 7 and are used for framing or targeting the human head 3, while laying it out well, namely fixing the composition by fixing the position and/or orientation and determining the size to be photographed. The positions of the index marks 17 and 18 on the reticle 15 are predetermined under consideration of parallax of the viewfinder 10, the focal length of the taking lens 7, the designated subject distance L, and an ordinary size of human heads as extracted statistically.

The index marks 17 and 18 respectively have a vertical width. The human head 3 is so framed or targeted that a top end of a human head image 103, visible through the viewfinder 10, is located between top and bottom edges 117a and 117b of the index mark 117, and that a bottom end of the human head image 103 is located between top and bottom edges 118a and 118b of the index mark 118. This framing orientation keeps the sizes A and B of Fig. 4 in tolerable ranges from AMIN to AMAX and from BMIN to BMAX. The vertical width of the index mark 117 constitutes a tolerable range of the top end, the vertical width of the index mark 118 constituting a tolerable range of the bottom end. The ordinary size of the human head image 103 can be so ranged that it lies, when at smallest, between the inside-arranged edges 118a and 117b, and, when at largest, between the outside-arranged edges 117a and 118b.

To photograph a portrait, the human head image 103 is observed through the viewfinder 10 with the index marks 117 and 118. The human head image 103 is framed at the index marks 117 and 118 so as to take a portrait 2 in which a well-laid-out image is reproduced on the receiving sheet. If the top and/or the bottom of the human head image 103 is deviated from the index marks 117 and/or 118, the subject distance L is adjusted by moving the camera 5, so as to bring both top and bottom of the human head image 103 to lap on the index marks 117 and 118. The human head 3 having the ordinary size, adjustment of the subject distance L is such as to keep it in the range from LMIN to LMAX. It is naturally possible to adjust also the height of the camera 5 or the chair which the person 6 sits on, for adjustment of vertical deviation of the human head image 103. There may be formed an auxiliary central index mark 19 in correspondence with the nose of the person 6, for the purpose of positioning the viewfinder 10 toward the human head image 103 relative to the horizontal direction.

The sizes A, B and C, referring to Fig. 4, are thus limited in the tolerable ranges so that a reproduced image 113 is well laid out according to the predetermined composition, both in position and in size. Should the reproduced image 113 have such a predetermined size but is not positioned as predetermined, the composition of the image 113 could be adjusted by using a cutter cutting margins of the portrait. However, the index marks 117 and 118 in the present invention enable the photographer to frame or target the human head image 103 according to the particular composition both in position and in size, so that margins of portraits as similarly finished can be cut away in the same manner of cutting.

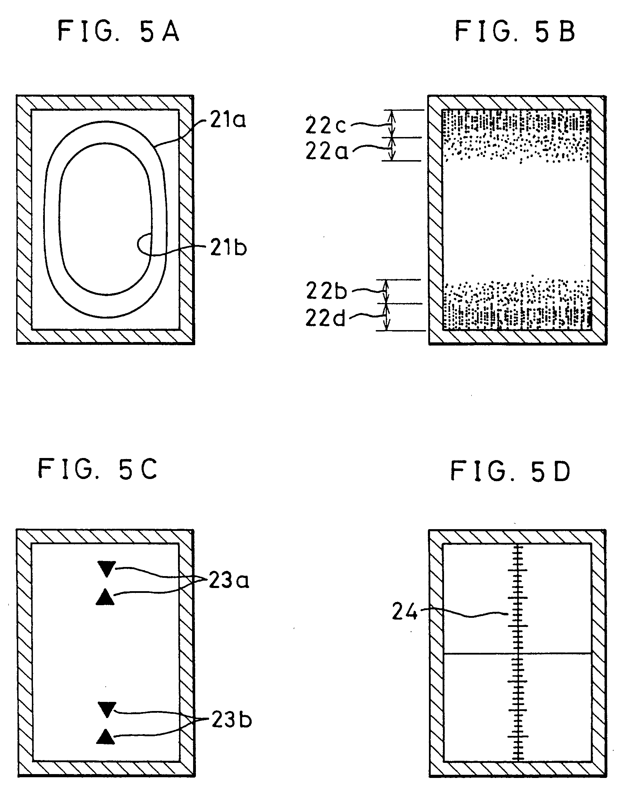

For better understanding of the invention, Figs. 5A to 5D illustrate examples of other indices indicated in the field frame. In Fig. 5A, contour lines 21a and 21b are so used that a contour of the human head image 3 is located between the contour lines 21a and 21b, at least relative to the vertical direction. The doughnut-shaped area between the lines 21a and 21b may be colored as semi-transparency, for convenience. In Fig. 5B, zones 22a and 22b are light-colored as semi-transparency, with zones 22c and 22d deeply colored as semi-transparency. The top and the bottom of the human head image 3 are limited by use of the zones 22a and 22b. Instead of differentiated density in color, zones can be separated by different colors as semi-transparency. In Fig. 5C, pairs of triangular dots 23a and 23b are adapted to limitation in framing the human head 3. In Fig. 5D, a horizontal line is provided with a scale 24 as reference of framing. Tolerable ranges can be preferably indicated by coloring at the relevant positions, like the dots 23a and 23b.

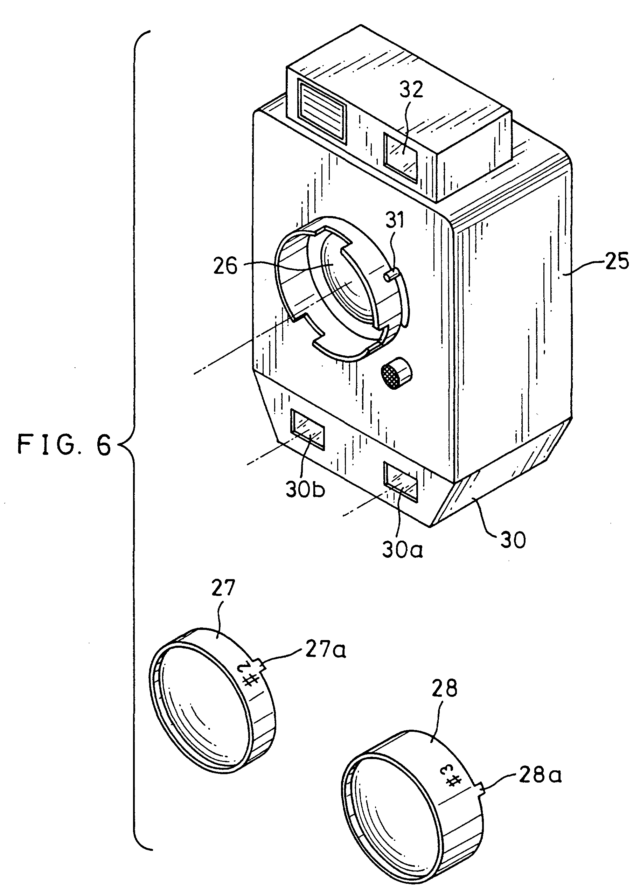

Fig. 6 illustrates a camera in accordance with the invention for the portrait photography. A taking lens assembly 26 as incorporated is combinable with attachable Wide-angle and Telephoto converter lenses 27 and 28 causing the focal length to be changeable in three steps. Under the standard subject distance from LMIN to LMAX, the film unit 8 is exposed through only the taking lens 26 like the former taking lens 7. The human head image 113 is well laid out in the portrait 2, so that the position and size are in tolerable ranges.

When the Wide-angle converter 27 is mounted, the focal length is shortened in combination with the lens assembly 26. With the Wide-angle converter 27, the human head 3 is photographed at a subject distance LW which is still shorter than LMIN i.e. the lower limit of the subject distance in photography without converter, so that the human head image 113 is laid out in the tolerable range on the portrait as finished. This is favorable in photographing the same human head 3 inevitably located somewhat farther. As the human head image 113 can be laid out in the tolerable range, there are upper and lower limits between which LW is tolerable.

When the Telephoto converter 28 is mounted, the focal length is lengthened in combination with the lens assembly 26. With the Telephoto converter 28, the human head 3 is photographed at a subject distance LT which is still longer than LMAX i.e. the upper limit of the subject distance in photography without converter, so that the human head image 113 is laid out in the tolerable range on the portrait as finished. This is favorable in photographing the same human head 3 inevitably located somewhat nearer. As the human head image 113 can be laid out in the tolerable range, there are upper and lower limits between which LT is tolerable.

The camera 25 incorporates a range finding device 30 of an active type. Through a projector window 30a, range finding beam is projected to the photographic subject. The range finding beam as reflected on the subject is received through a receiver window 30b. According to the beam as received, it is detected, in a lamp selector 43, whether the subject distance is within the standard range between LMIN and LMAX, within the Wide-angle range below LMIN, or within the Telephoto range over LMAX.

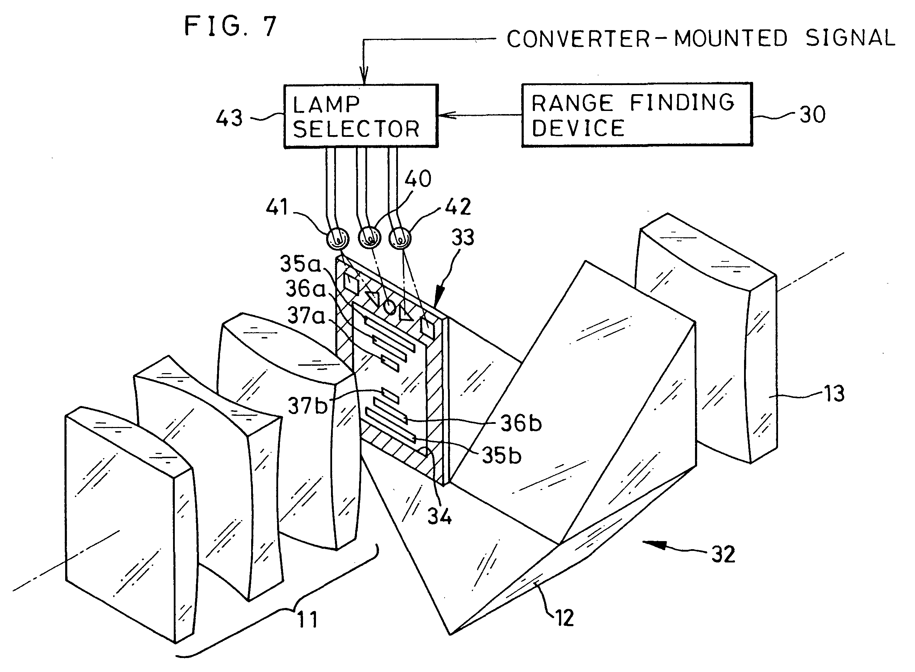

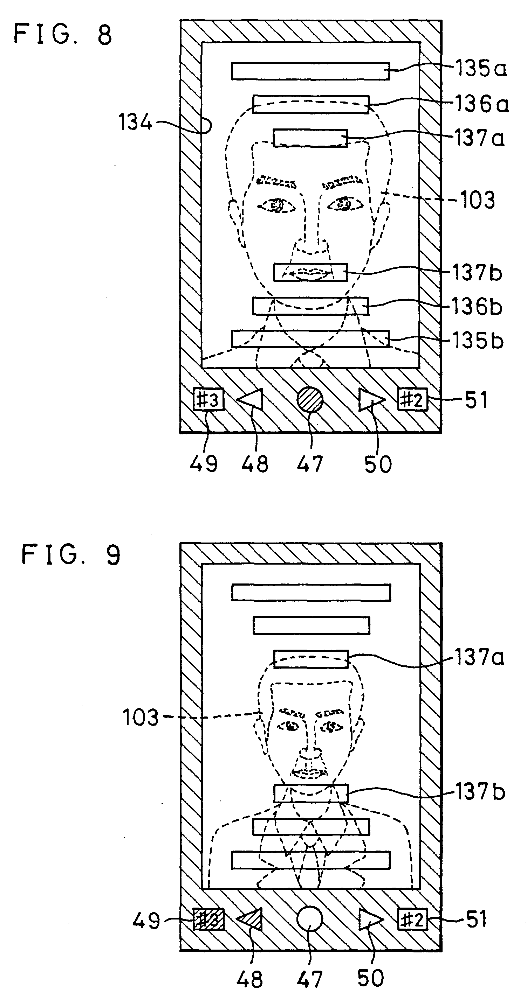

A viewfinder 32 is of a real-image type, and illustrated in Fig. 7. The viewfinder 32 has a reticle plate 33 different from the reticle 15 in the former viewfinder 10. The reticle 33 is provided with a field frame 34, and three pairs of semi-transparent index marks 35a, 35b, 36a, 36b, 37a and 37b. As illustrated in Fig. 8, positions of index mark images 135a, 135b, 136a, 136b, 137a and 137b are seen through the viewfinder 32 with a field frame image 134, and are used for framing the human head 3, while fixing the position and determining the size to be photographed. The human head 3 is so framed that a top end of the human head image 103, visible through the viewfinder 32, is located between respective pairs of horizontal edges of the index marks 135a, 136a and 137a, and that a bottom end of the human head image 103 is located between respective pairs of horizontal edges of the index marks 135b, 136b and 137b. The vertical width of the index marks 135a, 136a and 137a constitutes a tolerable range of the top end, the vertical width of the index marks 135b, 136b and 137b constituting a tolerable range of the bottom end.

Under the field frame 34 are arranged one round window 47, two delta windows 48 and 50, and two square windows 49 and 51, as illustrated in Figs. 8 and 9. Three indicator lamps 40, 41 and 42 are selectively actuated to indicate information of the windows 47 to 51 through the viewfinder 32. The lamp selector 43, for selective actuation of the indicator lamps 40 to 42, is supplied with a distance signal as generated from the range finding device 30, and a converter-mounted signal as generated from a converter detecting switch 31 operable when pressed by projections 27a and 28a. The output of the converter detecting switch 31 represents any of three states: mounting of the Wide-angle converter 27, mounting of the Telephoto converter 28, and lacking any converter on the taking lens 26.

When the subject distance of the human head 3 is in the standard range from LMIN to LMAX, the human head 3 is photographed through the taking lens 26 without converter. As illustrated in Fig. 8, the human head 3 is observed and so framed that the top and bottom of the human head image 103 lap on the index mark images 136a and 136b. According to a distance signal from the range finding device 30, it is detected that the human head 3 is in the standard range of the subject distance. The converter detecting switch 31 does not supply the lamp selector 43 with any converter-mounted signal. Then the lamp selector 43 actuates the Standard lamp 40 for continuous illumination, to indicate through the round window 47 the information of stand-by for photography at the standard focal length.

When the subject distance L of the human head 3 is LT farther than the standard range, the human head 3 is observed in an apparently small size, as illustrated in Fig. 9. According to a distance signal from the range finding device 30, it is detected that the human head 3 is in the Telephoto range of the subject distance. No converter 27 or 28 being mounted on the camera 25, the converter detecting switch 31 does not supply the lamp selector 43 with any converter-mounted signal. Detection of the Telephoto range despite lack of the converter-mounted signal causes the lamp selector 43 to actuate the Telephoto lamp 42 for repetitive winking illumination, to indicate through the windows 48 and 49 the information of requirement for mounting the Telephoto converter 28, of which the numeral appears in the window 49.

When the Telephoto converter 28 is mounted on the camera 25, the switch 31 is operated by the projection 28a and supplies the lamp selector 43 with the Telephoto-mounted signal, in response to which the Telephoto lamp 42 is continuously driven. The photographer then can recognize the Telephoto photography with the Telephoto converter 28. Now the index mark images 137a and 137b are used for framing the human head image 103. Due to LT of the subject distance, the top and bottom of the human head image 103 are located nearly in the widthwise middle of the index marks 137a and 137b, as illustrated in Fig. 9. Even if the subject distance should be slightly different from LT, there is no problem when the top and bottom of the human head image 103 are located within the index marks 137a and 137b.

As the Telephoto converter 28 is mounted, the human head 3 as recorded on the film unit 8 is magnified as illustrated in Fig. 4, despite the apparently unchanged size visible through the field frame 34. Targeting through the viewfinder 32 within the field frame 34 is adjusted by using the index mark image 137a and 137b corresponding to the Telephoto converter 28, so that the sizes A, B and C of Fig. 4 are kept in the tolerable ranges. If the top and bottom of the human head image 103 are minutely outside the index marks 137a and 137b, the distance of the camera 25 to the photographic subject can be adjusted correspondingly to locate the top and bottom of the human head image 103 within the index marks 137a and 137b.

When the subject distance L is LW, the Wide-angle lamp 41 is repetitively driven until the Wide-angle converter 27 is mounted. Information in the windows 50 and 51 are repetitively illuminated, in the latter of which the numeral of the Wide-angle converter 51 appears. When the Wide-angle converter 27 is mounted on the camera 25, the switch 31 is operated by the projection 27a and supplies the lamp selector 43 with the Wide-angle-mounted signal, in response to which the Wide-angle lamp 41 is continuously driven. Now the index mark images 135a and 135b are used for framing the human head image 103. Due to LW of the subject distance, the top and bottom of the human head image 103 are located nearly in the widthwise middle of the index marks 135a and 135b. Even if the subject distance is slightly different from LW, there is no problem when the top and bottom of the human head image 103 are located within the index marks 135a and 135b. If the top and bottom of the human head image 103 are minutely outside the index marks 135a and 135b, the distance of the camera 25 to the photographic subject can be adjusted correspondingly to locate the top and bottom of the human head image 103 within the index marks 135a and 135b.

If either converter lens is mounted despite an L in the standard range, the Standard lamp 40 is driven repetitively so as to require the photographer to dismount the converter from the camera 25. Then the photographer can take a portrait through the taking lens 26, without attachment of converter.

This construction is advantageous in selection of the indicator lamps after combination of the signals from the range finding device 30 and from the converter detecting switch 31, in order to confirm appropriate selection of a focal length in correspondence with the subject distance. The index mark images corresponding to the focal length as selected are visually selected through the viewfinder 32 so as to frame the human head image for the good position and size in reproduction. Therefore, the novel construction is highly advantageous in cases where the subject distance is inevitably unchangeable except minute adjustments. Note that the three pairs of index mark images 135a, 135b, 136a, 136b, 137a and 137b may be constructed such that they are invisible but that the particular one of the three pairs can be visualized when suitable in view of the selected focal length, in response to combination of the signals from the range finding device 30 and the converter detecting switch 31.

Note that, although the above embodiment relates to the viewfinders of a real-image type, the present invention is applicable to viewfinders of other types, e.g. inverted Galilean viewfinder of either an Albada type or a bright frame type. Although the index mark images are indicated by coloring the reticle plate as semi-transparency, index mark images can be electrically indicated, e.g. by use of liquid crystal display panel or light-emitting diode incorporated in the viewfinder. Although the instant film unit is used in the instant camera, the present invention is applicable to photographic cameras in which general purpose negative film can be used. It is to be noted that, unlike the instant film unit in which the reproduced size of the human head image is dependent only on the magnification in photography, a reproduced size of the human head image by means of the negative film is dependent not only on the magnification in photography but also on that in printing.

Although the present invention has been fully described by way of the preferred embodiments thereof with reference to the accompanying drawings, various changes and modifications will be apparent to those having skill in this field. Therefore, unless otherwise these changes and modifications depart from the scope of the present invention, they should be construed as included therein.

## Claims

1. A camera incorporating a taking lens assembly (7, 26) having a focal length, for taking a picture of a human head onto a photographic film, comprising:
a viewfinder (10, 32) for observing said human head; and
index means seen through the viewfinder and indicated within a field frame (16; 116; 34; 134) to be imaged onto said photographic film;
***characterized by***
the index means comprising at least one pair of index marks; wherein
the one index mark of each pair of index marks is arranged in the upper part (17; 117; 35a, 37a; 135a, 136a, 137a) of the field frame, and the other index mark of each pair of index marks is arranged in the lower part (18; 118; 35b, 37b, 135b, 136b, 137b) of the field frame;
the two index marks of each pair of index marks are constituted of rectangular marks having a vertical width defining top and bottom edges and arranged horizontally and parallel to one another in the field frame;
the two index marks of each pair of index marks are spaced apart from each other by a distance, the distance being predetermined such that the top end of the human head to be imaged onto the photographic film is located between the top and bottom edges of the index mark in the upper part of the field frame and the bottom end of the human head is located between the top and bottom edges of the index mark in the lower part of the field frame.

2. A camera as defined in claim 1, wherein:
A converter lens (27, 28) is selectively mountable on said taking lens assembly (26), the combination of said taking lens assembly with said converter lens having a focal length different from said focal length of said taking lens assembly (26); and
pairs of said index marks (135a and 135b, 136a and 136b, 137a and 137b) are provided, the distances of said index marks in respective pairs differing in accordance with said different focal length.

3. A camera as defined in claim 2, wherein said focal length of said combination is shorter than said focal length of said lens assembly (26).

4. A camera as defined in claim 2, wherein said focal length of said combination is longer than said focal length of said lens assembly (26) of said combination.

5. A camera as defined in one of the claims 2 to 4, further comprising:
range finding means (30) for measuring a distance of a human head to be imaged (3) from the camera to generate a distance signal; and
display means (41, 42, 43), for displaying in said viewfinder (32) instruction of mounting of said converter lens (27, 28) in response to said distance signal, said display means being actuated when said subject distance is such that said human head is inappropriate for photography only through said taking lens assembly (26).

6. A camera as defined in claim 5, wherein said display means includes:
telephoto and wide angle indicators (42, 41) arranged to be visible throughout the viewfinder; and
a selector circuit (43) for actuating said telephoto indicator (42) in response to said distance signal, when said subject distance from the camera is such that the human head is appropriate for photography through said first converter lens, and
for actuating said wide angle indicator (41) when said subject distance is such that the human head is appropriate for photography through a first converter lens, and for actuating said wide-angle indicator (41) when said subject distance is such that the human head is appropriate for photography through a second converter lens.

7. A camera as defined in claim 6, wherein:
said camera further comprising a converter detecting switch (31) for generating first and second converter-mounted signals respectively in response to mounting to said first and second converter lenses (27, 28);
said selector circuit (43) actuates said telephoto indicator (42) under a first condition, when said first mounted signal is absent while said subject distance is such that a human head (3) is appropriate for photography through said first converter lens;
actuates said telephoto indicator (42) under a second condition, when said first mounted signal is generated while said subject distance is such that the human head is appropriate for photography through converter lens;
actuates said wide angle indicator (41) under first condition, when second mounted signal is absent while said subject distance is such that the human head appropriate for photography through said converter lens; and
actuates said wide angle indicator (41) under second condition, when said second mounted signal is generated while said subject distance is such that the human head is appropriate for photography through said second converter lens.

8. A camera as defined in claim 7, wherein said range finding means is a range finding device (30) of an active type.

9. A camera as defined in claim 8, wherein said indicators (41, 42) are winked under said first condition, and actuated continuously under said second condition.

## Patentansprüche

1. Kamera mit einer Aufnahmelinsengruppe (7,26), die eine Brennweite aufweist, zum Aufnehmen eines Bildes eines menschlichen Kopfes auf einen fotografischen Film, enthaltend:
einen Sucher (10,32) zum Beobachten des menschlichen Kopfes; und
Markierungseinrichtungen, die durch den Sucher zu sehen sind und in einem Bildrahmen (16;116;34;134) angezeigt sind, der auf dem fotografischen Film abzubilden ist;
**dadurch gekennzeichnet, daß**
die Markierungseinrichtungen wenigstens ein Paar Markierungen enthalten; wobei
die eine Markierung eines jeden Markierungspaares im oberen Teil (17;117;35a,37a;135a,136a,137a) des Bildrahmens angeordnet ist und die andere Markierung eines jeden Markierungspaares im unteren Teil (18;118;35b,37b,135b,136b,137b) des Bildrahmens angeordnet ist;
die zwei Markierungen eines jeden Markierungspaares von rechteckigen Marken gebildet sind, die eine vertikale Breite haben, die obere und untere Ränder definieren und horizontal und parallel zueinander in dem Bildrahmen angeordnet sind;
die zwei Markierungen eines jeden Markierungspaares voneinander um eine Distanz beabstandet sind, die derart vorbestimmt ist, daß das obere Ende des auf dem fotografischen Film abzubildenden menschlichen Kopfes zwischen den oberen und unteren Rändern der Markierung im oberen Teil des Bildrahmens liegt und das untere Ende des menschlichen Kopfes zwischen den oberen und unteren Rändern der Markierung im unteren Teil des Bildrahmens liegt.

2. Kamera nach Anspruch 1, bei der:
eine Konverterlinse (27,28) wahlweise an der Aufnahmelinsengruppe (26) montierbar ist, wobei die Kombination der Aufnahmelinsengruppe mit der Konverterlinse eine Gesamtbrennweite hat, die von der Brennweite der Aufnahmelinsengruppe (26) verschieden ist; und
Paare der Markierungen (135a und 135b; 136a und 136b; 137a und 137b) vorgesehen sind,
wobei die Distanzen der Markierungen in entsprechenden Paaren entsprechend der Brennweite voneinander verschieden sind.

3. Kamera nach Anspruch 2, bei der die Brennweite der Kombination kürzer als die Brennweite der Linsengruppe (26) ist.

4. Kamera nach Anspruch 2, bei der die Brennweite der Kombination länger als die Brennweite der Linsengruppe (26) ist.

5. Kamera nach einem der Ansprüche 2 bis 4, weiterhin enthaltend:
einen Entfernungsmesser (30) zum Messen einer Distanz zwischen dem abzubildenden menschlichen Kopf (3) und der Kamera, um ein Entfernungssignal zu erzeugen; und
eine Anzeigeeinrichtung (41,42,43) zum Anzeigen einer Mitteilung über die Montage der Konverterlinse (27,28) im Sucher (32) in Abhängigkeit von dem Entfernungssignal, wobei die Anzeigeeinrichtung aktiviert ist, wenn die Aufnahmeentfernung derart ist, dass der menschliche Kopf für die Fotografie allein durch die Aufnahmelinsengruppe (26) ungeeignet ist.

6. Kamera nach Anspruch 5, bei der die Anzeigeeinrichtung enthält:
Tele- und Weitwinkelindikatoren (42,41), die dazu eingerichtet sind, im Sucher sichtbar zu sein; und
eine Wählschaltung (43) zum Aktivieren des Teleindikators (42) in Abhängigkeit von dem Entfernungssignal, wenn die Aufnahmeentfernung von der Kamera derart ist, dass der menschliche Kopf zur Fotografie durch die erste Konverterlinse geeignet ist, und
zum Aktivieren des Weitwinkelindikators (41), wenn die Aufnahmeentfernung derart ist, dass der menschliche Kopf zur Fotografie durch eine erste Konverterlinse geeignet ist, und zum Aktivieren des Weitwinkelindikators (41), wenn die Aufnahmeentfernung derart ist, dass der menschliche Kopf zur Fotografie durch die zweite Konverterlinse geeignet ist.

7. Kamera nach Anspruch 6, bei der:
die Kamera weiterhin einen Konverterdetektorschalter (31) zum Erzeugen erster bzw. zweiter Konverter-montiert-Signale in Abhängigkeit von der Montage der ersten und zweiten Konverterlinsen (27,28);
wobei die Wählschaltung (43) den Teleindikator (42) unter einer ersten Bedingung aktiviert, wenn das erste Moniert-Signal fehlt, während die Aufnahmeentfernung derart ist, dass ein menschlicher Kopf (3) für Fotografie durch die erste Konverterlinse geeignet ist;
den Teleindikator (42) unter einer zweiten Bedingung aktiviert, wenn das erste Montiert-Signal erzeugt wird, während die Aufnahmeentfernung derart ist, dass der menschliche Kopf für die Fotografie durch die Konverterlinse geeignet ist;
den Weitwinkelindikator (41) unter erster Bedingung aktiviert, wenn das zweite Montiert-Signal fehlt, während die Aufnahmeentfernung derart ist, dass der menschliche Kopf zur Fotografie durch die Konverterlinse geeignet ist; und
den Weitwinkelindikator (41) unter zweiter Bedingung aktiviert, wenn das zweite Montiert-Signal erzeugt wird, während die Aufnahmeentfernung derart ist, dass der menschliche Kopf zur Fotografie durch die zweite Konverterlinse geeignet ist; und

8. Kamera nach Anspruch 7, bei der der Entfernungsmesser ein solcher (30) vom aktiven Typ ist.

9. Kamera nach Anspruch 8, bei der die Indikatoren (41,42) unter der ersten Bedingung blinken und unter der zweiten Bedingung ununterbrochen aktiviert sind.

## Revendications

1. Appareil de prise de vues comprenant un ensemble formant objectif de prise de vues (7, 26) possédant une distance focale, pour enregistrer une image d'une tête humaine sur un film photographique, comprenant:
un viseur (10, 32) pour observer ladite tête humaine; et
des moyens de repérage visibles à travers le viseur et indiqué par un cadre d'image (16; 116; 34; 134) dont l'image doit être formée sur ledit film photographique;
**caractérisé**
**en ce que** les moyens de repérage comprennent au moins une paire de marques de repérage;
une marque de repérage de chaque paire de marques de repérage étant disposée dans la partie supérieure (17; 117 ; 35a, 37a; 135a, 136a, 137a) du cadre d'image, et l'autre marque de repérage de chaque paire de marques de repérage est disposée dans la partie inférieure (18; 118; 35b, 37b, 135; 135b, 136b, 137b) du cadre d'image;
les deux marques de repérage de chaque paire de marques de repérage sont constituées de marques rectangulaires possédant une largeur verticale définissant des bords supérieur et inférieur et disposées horizontalement et parallèlement entre elles dans le cadre d'image;
les deux marques de repérage de chaque paire de marques de repérage sont séparées l'une de l'autre par une distance, la distance étant prédéterminée de telle sorte que l'extrémité supérieure de la tête humaine dont l'image doit être formée sur le film photographique est située entre les bords supérieur et inférieur de la marque de repérage dans la partie supérieure du cadre d'image, et l'extrémité inférieure de la tête humaine est située entre les bords supérieur et inférieur de la marque de repérage dans la partie inférieure du cadre d'image.

2. Appareil de prise de vues selon la revendication 1, dans lequel:
une lentille formant convertisseur (27, 28) peut être montée sélectivement sur ledit ensemble d'objectif de prise de vues (26), la combinaison dudit ensemble d'objectif de prise de vue et de la lentille formant convertisseur ayant une distance focale différente de ladite distance focale dudit ensemble d'objectif de prise de vues (26); et
des paires desdites marques de repérage (135a et 135b; 136a et 136b, 137a et 137b) sont prévues, les distances desdites marques de repérage de paires respectives étant différentes en fonction de ladite distance focale différente.

3. Appareil de prise de vues selon la revendication 2, dans lequel la distance focale de ladite combinaison est inférieure à ladite distance focale dudit ensemble d'objectif (26).

4. Appareil de prise de vues selon la revendication 2, dans lequel ladite distance focale de ladite combinaison est supérieure à ladite distance focale dudit ensemble d'objectif (26) de ladite combinaison.

5. Appareil de prise de vues selon l'une des revendications 2 à 4, comprenant en outre:
des moyens de télémétrie (30) pour mesurer la distance entre une tête humaine (3) dont l'image doit être formée, et l'appareil de prise de vues de manière à produire un signal de distance; et
des moyens d'affichage (41,42, 43) pour afficher dans ledit viseur (39) une instruction de montage de ladite lentille formant convertisseur (27, 28) en réponse audit signal de distance, lesdits moyens d'affichage étant actionnés lorsque ladite distance du sujet est telle que ladite tête humaine ne peut pas être photographiée uniquement au moyen dudit ensemble d'objectif de prise de vues.

6. Appareil de prise de vues selon la revendication 5, dans lequel lesdits moyens d'affichage comprenant:
des indicateurs (42, 41) de téléobjectif et de grand angle disposés de manière à être visibles dans l'ensemble du viseur;
un circuit de sélection (43) pour actionner ledit indicateur de téléobjectif (42) en réponse audit signal de distance, lorsque ladite distance entre le sujet et
l'appareil de prise de vues est telle que la tête humaine peut être photographiée au moyen de ladite première lentille formant convertisseur, et
pour actionner ledit indicateur de grand angle (41) lorsque ladite distance par rapport au sujet est telle que la tête humaine peut être photographiée par une première lentille formant convertisseur et pour actionner ledit indicateur de grand angle (41) lorsque ladite distance par rapport au sujet est telle que la tête humaine peut être photographiée par une seconde lentille formant convertisseur.

7. Appareil de prise de vues selon la revendication 6, dans lequel:
ledit appareil de prise de vues comporte en outre un commutateur (31) de détection de convertisseur pour produire des premier et second signaux de convertisseur installé, respectivement en réponse au montage desdites première et seconde lentilles formant convertisseurs (27, 28);
ledit circuit de sélection (43) active l'indicateur de téléobjectif (42) dans une première condition, lorsque ledit premier signal de convertisseur monté est absent alors que ladite distance par rapport au sujet est telle qu'une tête humaine (3) peut être photographiée au moyen de ladite première lentille formant convertisseur;
active ledit indicateur de téléobjectif (42) dans une seconde condition, lorsque ledit premier signal de convertisseur installé est produit alors que ladite distance par rapport au sujet est telle que la tête peut être photographiée par une lentille formant convertisseur;
active ledit indicateur de grand angle (41) dans la première condition, lorsque le second signal de convertisseur monté est absent alors que ladite distance par rapport au sujet est telle que la tête humaine peut être photographiée par ladite lentille formant convertisseur; et
active ledit indicateur de grand angle (41) dans la seconde condition, lorsque ledit second signal de convertisseur installé est produit alors que ladite distance par rapport au sujet est telle que la tête humaine peut être photographiée par ladite seconde lentille formant convertisseur.

8. Appareil de prise de vues selon la revendication 7, dans lequel lesdits moyens de télémétrie sont un dispositif de télémétrie (30) de type actif.

9. Appareil de prise de vues selon la revendication 8, dans lequel lesdits indicateurs (41, 42) clignotent dans ladite première condition et sont activés continûment dans ladite seconde condition.
